# EUROPEAN PATENT APPLICATION

(11) **EP 3 780 170 A1**
(43) Date of publication of application: **17.02.2021**
(21) Application number: 19771267.2
(22) Date of filing: 13.03.2019
(51) Int. Cl.: H01M 4/137, H01M 4/58, H01M 4/60, H01M 10/052, H01M 10/0566

(54) **METHOD FOR SUPPRESSING THERMAL RUNAWAY CAUSED BY INTERNAL SHORT CIRCUIT**

(30) Priority: 23.03.2018 JP 2018056968
(71) Applicant: ADEKA CORPORATION, Arakawa-ku Tokyo 116-8554 (JP)
(72) Inventor: KAKIAGE, Kenji, Tokyo 116-8554 (JP); HOMMA, Masatoshi, Tokyo 116-8554 (JP); AOYAMA, Yohei, Tokyo 116-8554 (JP)
(74) Representative: Forstmeyer, Dietmar
(86) International application number: PCT/JP2019/010400
(87) International publication number: WO 2019/181703

(57) **Abstract**

It is an object of the present invention to provide a non-aqueous electrolyte secondary battery that is small and lightweight, has a high capacity, and can be produced without causing a size increase and a significant cost increase, wherein, even if an internal short circuit occurs, thermal runaway is unlikely to occur, and there is no risk of ignition or explosion. The present invention is a method for suppressing thermal runaway caused by an internal short circuit, wherein sulfur-modified polyacrylonitrile is contained in a negative electrode material mixture layer in a non-aqueous electrolyte secondary battery that includes: a positive electrode that contains a positive electrode active material; a negative electrode that contains a negative electrode active material; and a non-aqueous electrolyte. The amount of sulfur-modified polyacrylonitrile can be set to 30 mass% or more.

## Description

### Technical Field

The present invention relates to a method for suppressing thermal runaway caused by an internal short circuit in a non-aqueous electrolyte secondary battery.

### Background Art

Non-aqueous electrolyte secondary batteries such as lithium ion secondary batteries are small and lightweight, have a high energy density and a high capacity, and can be repeatedly charged and discharged, and thus are widely used as power sources for portable electronic devices such as portable personal computers, handheld video cameras, and information terminals. Also, from the viewpoint of environmental issues, electric vehicles, in which non-aqueous electrolyte secondary batteries are used, and hybrid vehicles, in which electric power is used as part of the motive power, are in practical use.

A non-aqueous electrolyte secondary battery includes members such as electrodes, a separator, and an electrolyte. A flammable organic solvent is used as the main solvent of the electrolyte, and thus, if a large amount of energy is released due to an internal short circuit or the like, thermal runaway occurs, which may cause a risk of ignition or explosion. Accordingly, various measures have been proposed. As examples of such measures, the following methods are known:
a method in which a porous film composed mainly of polyolefin is used as a separator (see, for example, Patent Literatures 1 and 2);
a method in which, in addition to a separator, a porous heat resistant layer is provided between a positive electrode and a negative electrode (see, for example, Patent Literature 3);
a method in which the surface of an electrode active material is covered with a metal oxide (see, for example, Patent Literature 4);
a method in which a lithium-containing nickel oxide is used as a positive electrode active material (see, for example, Patent Literature 5);
a method in which an olivine-type lithium phosphate compound is used as a positive electrode active material (see, for example, Patent Literature 6);
a method in which a lithium titanate compound with a spinel structure is used as a negative electrode active material (see, for example, Patent Literature 7);
a method in which a nonflammable fluorine-based solvent is used as the main solvent of an electrolyte (see, for example, Patent Literatures 8 and 9); and
a method in which a solid electrolyte that does not contain an organic solvent is used as an electrolyte (see, for example, Patent Literature 10).

In order to prevent an internal short circuit by using a porous film separator composed mainly of polyolefin, the separator needs to be thick. With the method in which a porous heat resistant layer is provided, the size of the battery increases in an amount corresponding to the porous heat resistant layer. With the method in which the surface of an electrode active material is covered with a metal oxide, the amount of electrode active material contained in an electrode material mixture layer of an electrode relatively decreases, which reduces the battery capacity. In either case, the advantages of non-aqueous electrolyte secondary batteries such as being small and lightweight and having a high capacity are lost. With the method in which a lithium-containing nickel oxide or an olivine-type lithium phosphate compound is used as a positive electrode active material and the method in which a lithium titanate compound with a spinel structure is used as a negative electrode active material, a high charge discharge capacity cannot be obtained. Also, with the method in which a fluorine-based solvent is used, because the fluorine-based solvent is very expensive, it leads to a significant cost increase. With the method in which a solid electrolyte is used, because a solid electrolyte material with no fluidity is used, the internal resistance increases, resulting in poorer performance than in the case where an electrolyte that contains an organic solvent is used.

On the other hand, sulfur-modified polyacrylonitrile is known as an electrode active material that has a large charge discharge capacity and in which the reduction in the charge discharge capacity caused by repetition of charge and discharge (hereinafter, also referred to as "cycle characteristics") is small (see, for example, Patent Literatures 11 to 13). However, it is not known that, in a non-aqueous electrolyte secondary battery that includes a negative electrode whose electrode material mixture layer contains sulfur-modified polyacrylonitrile, even if an internal short circuit occurs, thermal runaway is unlikely to occur, and there is no risk of ignition or explosion.

### Citation List

### Patent Literature

Patent Literature 1: US 2018097256
Patent Literature 2: US 9923181
Patent Literature 3: US 7759004
Patent Literature 4: JP 2011-216300A
Patent Literature 5: JP 2002-015736A
Patent Literature 6: US 7572548
Patent Literature 7: JP 2008-159280A
Patent Literature 8: US 2009253044
Patent Literature 9: US 8163422
Patent Literature 10: US 2016315324
Patent Literature 11: US 8940436
Patent Literature 12: WO2012/114651
Patent Literature 13: US 2014134485

### Summary of Invention

It is an object of the present invention to provide a non-aqueous electrolyte secondary battery that is small and lightweight, has a high capacity, and can be produced without causing a size increase and a significant cost increase, wherein, even if an internal short circuit occurs, thermal runaway is unlikely to occur, and there is no risk of ignition or explosion.

The inventors of the present invention conducted an in-depth study to achieve the above-described object. As a result, they found that, by using a negative electrode that contains sulfur-modified polyacrylonitrile, even in a non-aqueous electrolyte secondary battery that contains an electrolyte in which an organic solvent is used as the solvent, thermal runaway is unlikely to occur, and ignition or explosion caused by an internal short circuit can be prevented. In this way, they accomplished the present invention.

Specifically, the present invention provides a method for suppressing thermal runaway caused by an internal short circuit, wherein sulfur-modified polyacrylonitrile is contained in a negative electrode material mixture layer in a non-aqueous electrolyte secondary battery that includes: a positive electrode that contains a positive electrode active material; a negative electrode that contains a negative electrode active material; and a non-aqueous electrolyte.

### Brief Description of Drawings

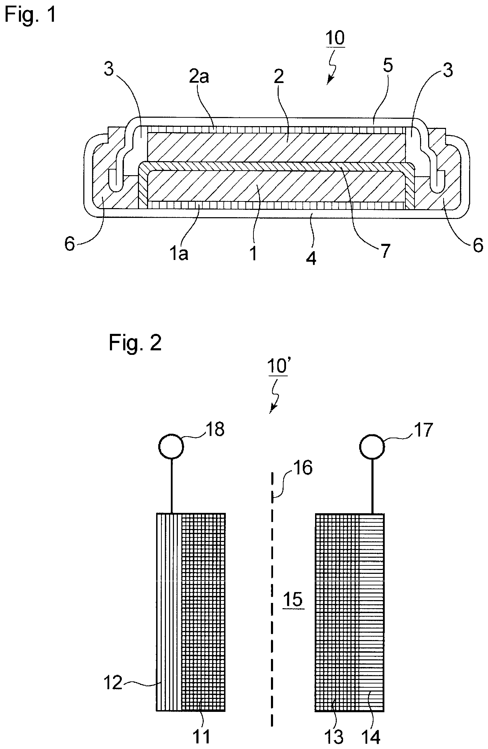

[Fig. 1] Fig. 1 is a vertical cross-sectional view schematically showing an example of the structure of a coin-type non-aqueous electrolyte secondary battery.
[Fig. 2] Fig. 2 is a schematic diagram showing the basic configuration of a cylindrical non-aqueous electrolyte secondary battery.

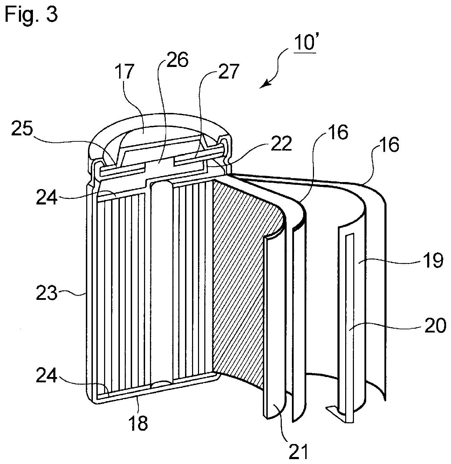

[Fig. 3] Fig. 3 is a perspective view showing the internal structure of a cylindrical non-aqueous electrolyte secondary battery in cross section.

### Description of Embodiments

A feature of a method for suppressing thermal runaway caused by an internal short circuit according to the present invention is that sulfur-modified polyacrylonitrile is contained in an electrode material mixture layer of a negative electrode. With this feature, even if an internal short circuit occurs, thermal runaway is unlikely to occur, and the risk of ignition or explosion can be reduced. Sulfur-modified polyacrylonitrile functions as a negative electrode active material.

Sulfur-modified polyacrylonitrile is a compound obtained by heating polyacrylonitrile and elemental sulfur in a non-oxidizing atmosphere. There is no problem even if the polyacrylonitrile is a copolymer of acrylonitrile with a monomer such as, for example, acrylic acid, vinyl acetate, N-vinylformamide, or N,N'-methylenebis(acrylamide). However, because the battery performance decreases as the amount of acrylonitrile is lower, the amount of acrylonitrile in the copolymer of acrylonitrile with a monomer is preferably at least 90 parts by mass or more.

The proportion of elemental sulfur to polyacrylonitrile in the heating processing is preferably 100 parts by mass to 1500 parts by mass, and more preferably 150 parts by mass to 1000 parts by mass relative to 100 parts by mass of polyacrylonitrile. The heating temperature is preferably 250°C to 550°C, and more preferably 350°C to 450°C. Unreacted elemental sulfur causes a reduction in the cycle characteristics of the secondary battery, and it is therefore preferable to remove unreacted elemental sulfur by performing, for example, heating, solvent washing, or the like. The amount of sulfur in sulfur-modified polyacrylonitrile is preferably 25 mass% to 60 mass%, and more preferably 30 mass% to 55 mass% because a large charge discharge capacity can be obtained.

The average particle size of sulfur-modified polyacrylonitrile is preferably 0.5 µm to 100 µm. As used herein, the term "average particle size" refers to a 50% particle size (D50) measured using a laser diffraction light scattering method. The term "particle size" refers to diameter based on volume. In the laser diffraction light scattering method, the diameter of secondary particles is measured. A large amount of effort is required to reduce the average particle size of sulfur-modified polyacrylonitrile to 0.5 µm or less, and a further improvement in battery performance cannot be expected. If the average particle size of sulfur-modified polyacrylonitrile is greater than 100 µm, a smooth electrode material mixture layer may not be obtained. The particle size of sulfur-modified polyacrylonitrile is more preferably 1 µm to 50 µm, and even more preferably 1 µm to 30 µm. A desired particle size of sulfur-modified polyacrylonitrile can be achieved by using a method such as pulverization. The pulverization may be dry pulverization that is performed in a gas or wet pulverization that is performed in a liquid such as water. Examples of industrial pulverization method include a ball mill, a roller mill, a turbo mill, a jet mill, a cyclone mill, a hammer mill, a pin mill, a rotary mill, a vibratory mill, a planetary mill, an attritor mill, and a bead mill.

The negative electrode is an electrode that includes a current collector and an electrode material mixture layer that is formed on the current collector and that contains sulfur-modified polyacrylonitrile. The electrode material mixture layer is formed by applying a slurry onto the current collector and drying the slurry, the slurry being prepared by adding sulfur-modified polyacrylonitrile, a binder, a conductive aid, and optionally other negative electrode active materials to a solvent.

The amount of sulfur-modified polyacrylonitrile in the electrode material mixture layer of the negative electrode is preferably 30 mass% or more, more preferably 40 mass% or more, and even more preferably 50 mass% or more. If the amount of sulfur-modified polyacrylonitrile is less than 30 mass%, the effect of suppressing thermal runaway may not be obtained sufficiently. There is no particular limitation on the upper limit of the amount of sulfur-modified polyacrylonitrile. However, there may be a case where the physical strength of the electrode material mixture layer decreases, and thus the upper limit of the amount of sulfur-modified polyacrylonitrile is preferably 99.5 mass% or less, more preferably 99 mass% or less, and even more preferably 98 mass% or less.

Only sulfur-modified polyacrylonitrile may be used as the electrode active material of the negative electrode. Alternatively, sulfur-modified polyacrylonitrile may be combined with other negative electrode active materials as long as the amount of sulfur-modified polyacrylonitrile is 30 mass% or more. Particularly when the amount of sulfur-modified polyacrylonitrile in the electrode material mixture layer of the negative electrode is small, the charge discharge capacity is also small, and it is therefore preferable to combine sulfur-modified polyacrylonitrile with other negative electrode active materials. The larger the amount of negative electrode active materials in the electrode material mixture layer of the negative electrode, the more preferable, because the charge discharge capacity increases. However, if the amount of negative electrode active materials in the electrode material mixture layer of the negative electrode is too large, the conductivity and the physical strength of the electrode material mixture layer decrease. For this reason, the amount of negative electrode active materials in the electrode material mixture layer of the negative electrode is preferably 99.5 mass% or less, more preferably 99 mass% or less, and even more preferably 98 mass% or less.

Examples of other negative electrode active materials include natural graphite, artificial graphite, non-graphitizable carbon, graphitizable carbon, lithium, a lithium alloy, silicon, a silicon alloy, silicon oxide, tin, a tin alloy, tin oxide, phosphorus, germanium, indium, copper oxide, antimony sulfide, titanium oxide, iron oxide, manganese oxide, cobalt oxide, nickel oxide, lead oxide, ruthenium oxide, tungsten oxide, and zinc oxide. Other examples include composite oxides such as LiVO₂, Li₂VO₄, and Li₄Ti₅O₁₂. Natural graphite and artificial graphite have high electric conductivity, and also function as a conductive aid.

As the conductive aid, a known conductive aid used for an electrode can be used. Specific examples include: carbon materials such as carbon black, Ketjen black, acetylene black, channel black, furnace black, lamp black, thermal black, carbon nanotubes, vapor grown carbon fibers (VGCF), graphene, fullerene, and needle coke; metal powders such as an aluminum powder, a nickel powder, and a titanium powder; conductive metal oxides such as zinc oxide and titanium oxide; and sulfides such as La₂S₃, Sm₂S₃, Ce₂S₃, and TiS₂. The average particle size of the conductive aid is preferably 0.0001 µm to 100 µm, and more preferably 0.01 µm to 50 µm.

The conductive aid may be omitted if the electrode material mixture layer contains a negative electrode active material with high conductivity such as natural graphite or artificial graphite. However, in order to obtain an electrode material mixture layer with sufficient conductivity, it is preferable that the electrode material mixture layer contains a conductive aid. If the amount of conductive aid in the electrode material mixture layer is too small, sufficient conductivity may not be obtained. If the amount of conductive aid in the electrode material mixture layer is too large, the amount of negative electrode active material is reduced, and the charge discharge capacity decreases. For this reason, the amount of conductive aid in the electrode material mixture layer is preferably 0.1 mass% to 30 mass%, more preferably 1 mass% to 20 mass%, and even more preferably 2 mass% to 15 mass%.

As the binder, a known binder used for an electrode can be used. Examples include styrene-butadiene rubber, butadiene rubber, polyethylene, polypropylene, polyamide, polyamide imide, polyimide, polyacrylonitrile, polyurethane, polyvinylidene fluoride, polytetrafluoroethylene, ethylene-propylene-diene rubber, fluorine rubber, styrene-acrylic acid ester copolymer, ethylene-vinyl alcohol copolymer, acrylonitrile butadiene rubber, styrene-isoprene rubber, polymethyl methacrylate, polyacrylate, polyvinyl alcohol, polyvinyl ether, carboxymethyl cellulose, carboxymethyl cellulose sodium, methyl cellulose, cellulose nanofibers, polyethylene oxide, starch, polyvinyl pyrrolidone, polyvinyl chloride, polyacrylic acid, and the like.

As the binder, it is preferable to use a water-based binder because the environmental burden is low, and it is more preferable to use styrene-butadiene rubber, carboxymethyl cellulose sodium, and polyacrylic acid. These binders may be used alone or in a combination of two or more. The amount of binder in the electrode material mixture layer is preferably 0.5 mass% to 30 mass%, and more preferably 1 mass% to 20 mass%.

Examples of the solvent used to prepare the slurry include propylene carbonate, ethylene carbonate, diethyl carbonate, dimethyl carbonate, ethyl methyl carbonate, 1,2-dimethoxyethane, 1,2-diethoxyethane, acetonitrile, propionitrile, tetrahydrofuran, 2-methyl tetrahydrofuran, dioxane, 1,3-dioxolane, nitromethane, N-methyl pyrrolidone, N,N-dimethyl formamide, dimethyl acetamide, methyl ethyl ketone, cyclohexanone, methyl acetate, methyl acrylate, diethyl triamine, N,N-dimethylaminopropylamine, polyethylene oxide, tetrahydrofuran, dimethylsulfoxide, sulfolane, γ-butyrolactone, water, alcohol, and the like. The amount of solvent used can be adjusted according to the method for applying the slurry. For example, in the case of a doctor blade method, the amount of solvent is preferably 10 mass% to 80 mass% of the slurry, and more preferably 20 mass% to 70 mass% of the slurry.

The slurry may contain other components in addition to the electrode active material, the binder, and the conductive aid. Examples of other components include a viscosity adjusting agent, a reinforcing material, an antioxidant, a dispersant, and the like.

There is no particular limitation on the method for preparing the slurry. For example, an ordinary ball mill, a sand mill, a bead mill, a pigment disperser, a mortar grinder, an ultrasonic disperser, a homogenizer, a rotation/revolution mixer, a planetary mixer, Filmix, Jet Paster, or the like can be used.

As the material of the current collector, conductive materials such as titanium, a titanium alloy, aluminum, an aluminum alloy, copper, nickel, stainless steel, and nickel-plated steel are used. The surface of these conductive materials may be coated with carbon. Among these, aluminum and copper are preferably used from the viewpoint of conductivity and cost. The current collector may be in the form of a foil, a plate, a mesh or the like, and is preferably in the form of a foil. In the case where the current collector is in the form of a foil, the thickness of the foil is normally 1 µm to 100 µm.

There is no particular limitation on the method for applying the slurry to the current collector, and various methods can be used such as a die coater method, a comma coater method, a curtain coater method, a spray coater method, a gravure coater method, a flexo coater method, a knife coater method, a doctor blade method, a reverse roll method, a brush application method, and a dipping method. It is preferable to use a die coater method, a doctor blade method, and a knife coater method because a coating layer with a good surface state can be obtained according to the physical properties such as viscosity and the drying properties of the slurry. The slurry can be applied to one surface or both surfaces of the current collector. In the case where the slurry is applied to both surfaces of the current collector, the slurry may be applied first to one surface and then to the other, or simultaneously to both surfaces. Also, the slurry may be applied continuously or intermittently to the surface of the current collector, or may be applied in the form of a stripe. The thickness, the length, and the width of the coating layer can be determined as appropriate according to the battery size.

There is no particular limitation on the method for drying the slurry applied to the current collector, and various methods can be used such as drying with warm air, hot air or low-moisture air, vacuum drying, placing in a heating furnace or the like, and irradiation with far-infrared rays, infrared rays or electron beams. By drying the slurry, volatile components such as the solvent volatilize from the coating film made using the slurry, and an electrode material mixture layer is formed on the current collector. After that, the electrode may be pressed as needed. As the pressing method, for example, a die pressing method or a roll pressing method may be used.

As a positive electrode active material of a positive electrode in a non-aqueous electrolyte secondary battery to which the present invention is applicable, a known positive electrode active material can be used. Examples of the known positive electrode active material include a lithium transition metal composite oxide, a lithium-containing transition metal phosphoric acid compound, a lithium-containing silicate compound, a lithium-containing transition metal sulfuric acid compound, and the like. The transition metal contained in the lithium transition metal composite oxide is preferably vanadium, titanium, chromium, manganese, iron, cobalt, nickel, copper, or the like. Specific examples of the lithium transition metal composite oxide include: lithium cobalt composite oxides such as LiCoO₂; lithium nickel composite oxides such as LiNiO₂; lithium manganese composite oxides such as LiMnO₂, LiMn₂O₄, Li₂MnO₃; lithium transition metal composite oxides in which some of the atoms of the main transition metal are substituted by other metals such as aluminum, titanium, vanadium, chromium, manganese, iron, cobalt, lithium, nickel, copper, zinc, magnesium, gallium, and zirconium; and the like. Examples of the lithium transition metal composite oxides in which some of the atoms of the main transition metal are substituted by other metals include Li_{1.1}Mn_{1.8}Mg_{0.1}O₄, Li_{1.1}Mn_{1.85}Al_{0.05}O₄, LiNi_{0.5}Co_{0.2}Mn_{0.3}O₂, LiNi_{0.8}Co_{0.1}Mn_{0.1}O₂, LiNi_{0.5}Mn_{0.5}O₂, LiNi_{0.80}Co_{0.17}Al_{0.03}O₂, LiNi_{0.80}Co_{0.15}Al_{0.05}O₂, Li(Ni_{1/3}Co_{1/3}Mn_{1/3})O₂, LiNi_{0.6}Co_{0.2}Mn_{0.2}O₂, LiMn_{1.8}Al_{0.2}O₄, LiNi_{0.5}Mn_{1.5}O₄, Li₂MnO₃-LiMO₂ (M = Co, Ni, or Mn), and the like. The transition metal contained in the lithium-containing transition metal phosphoric acid compound is preferably vanadium, titanium, manganese, iron, cobalt, nickel, or the like. Specific examples include: iron phosphate compounds such as LiFePO₄ and LiMnₓFe₁₋ₓPO₄ (0 < x < 1); cobalt phosphate compounds such as LiCoPO₄; lithium-containing transition metal phosphoric acid compounds in which some of the atoms of the main transition metal are substituted by other metals such as aluminum, titanium, vanadium, chromium, manganese, iron, cobalt, lithium, nickel, copper, zinc, magnesium, gallium, zirconium, and niobium; vanadium phosphate compounds such as Li₃V₂(PO₄)₃; and the like. Examples of the lithium-containing silicate compound include Li₂FeSiO₄ and the like. Examples of the lithium-containing transition metal sulfuric acid compound include LiFeSO₄, LiFeSO₄F, and the like. These may be used alone or in a combination of two or more.

As the positive electrode active material used in the method for suppressing thermal runaway of the present invention, it is preferable to use LiCoO₂, LiMn₂O₄, LiNi_{0.5}Mn_{1.5}O₄, Li(Ni_{0.8}Co_{0.15}Al_{0.05})O₂, LiNi_{X}Co_{Y}Mn_{z}O₂ (X + Y + Z = 1, 0 ≤ X ≤ 1, 0 ≤ Y ≤ 1, and 0 ≤ Z ≤ 1), LiNiO₂, and Li₂MnO₃-LiMO₂ (M = Co, Ni, or Mn). These positive electrode active materials have a large charge discharge capacity, and thus thermal runaway is likely to occur due to an internal short circuit. However, by using a negative electrode that contains sulfur-modified polyacrylonitrile, thermal runaway caused by an internal short circuit in the non-aqueous electrolyte secondary battery can be suppressed.

The positive electrode of the non-aqueous electrolyte secondary battery to which the present invention is applicable can be produced based on the method for producing a negative electrode described above by replacing the negative electrode active material with any of the known positive electrode active materials listed above. However, because a compound that is acidic in an aqueous solution is often used as the positive electrode active material, it is preferable to use an organic solvent as the solvent contained in the slurry, and it is also preferable to use a solvent-based binder as the binder.

Examples of the non-aqueous electrolyte contained in the non-aqueous electrolyte secondary battery to which the present invention is applicable include: a liquid electrolyte obtained by dissolving an electrolyte in an organic solvent; a polymer gel electrolyte obtained by dissolving an electrolyte in an organic solvent and gelling with a polymer; a pure polymer electrolyte obtained by dispersing an electrolyte in a polymer, without containing an organic solvent; an inorganic solid electrolyte; and the like.

As the electrolyte used in the liquid electrolyte or the polymer gel electrolyte, for example, a conventionally known lithium salt can be used. Examples include LiPF₆, LiBF₄, LiAsF₆, LiCF₃SO₃, LiCF₃CO₂, LiN(CF₃SO₂)₂, LiN(C₂F₅SO₂)₂, LiN(SO₂F)₂, LiC(CF₃SO₂)₃, LiB(CF₃SO₃)₄, LiB(C₂O₄)₂, LiBF₂(C₂O₄), LiSbF₆, LiSiF₅, LiSCN, LiC10₄, LiCl, LiF, LiBr, LiI, LiAlF₄, LiAlCl₄, LiPO₂F₂, derivatives thereof, and the like. Among these, it is preferable to use one or more selected from the group consisting of LiPF₆, LiBF₄, LiClO₄, LiAsF₆, LiCF₃SO₃, LiN(CF₃SO₂)₂, LiN(C₂F₅SO₂)₂, LiN(SO₂F)₂, LiC(CF₃SO₂)₃, derivatives of LiCF₃SO₃, and derivatives of LiC(CF₃SO₂)₃. The amount of electrolyte in the liquid electrolyte or the polymer gel electrolyte is preferably 0.5 mol/L to 7 mol/L, and more preferably 0.8 mol/L to 1.8 mol/L.

Examples of the electrolyte used in the pure polymer electrolyte include LiN(CF₃SO₂)₂, LiN(C₂F₅SO₂)₂, LiN(SO₂F)₂, LiC(CF₃SO₂)₃, LiB(CF₃SO₃)₄, and LiB(C₂O₄)₂.

Examples of the inorganic solid electrolyte include: phosphoric acid-based materials such as Li₁₊ₓAₓB_{2-y}(PO₄)₃ (A = Al, Ge, Sn, Hf, Zr, Sc, or Y, B = Ti, Ge, or Zn, and 0 < x < 0.5), LiMPO₄ (M = Mn, Fe, Co, or Ni), and Li₃PO₄; lithium composite oxides such as Li₃XO₄ (X = As or V), Li₃₊ₓAₓB₁₋ₓO₄ (A = Si, Ge, or Ti, B = P, As, or V, and 0 < x < 0.6), Li₄₊ₓAₓSi₁₋ₓO₄ (A = B, Al, Ga, Cr, or Fe, and 0 < x < 0.4) (A = Ni or Co, and 0 < x < 0.1), Li_{4-3y}Al_{y}SiO₄ (0 < y < 0.06), Li_{4-2y}Zn_{y}GeO₄ (0 < y < 0.25), LiAlO₂, Li₂BO₄, Li₄XO₄ (X = Si, Ge, or Ti), and lithium titanates (LiTiO₂, LiTi₂O₄, Li₄TiO₄, Li₂TiO₃, Li₂Ti₃O₇, and Li₄Ti₅O₁₂); compounds that contain lithium and a halogen such as LiBr, LiF, LiCl, LiPF₆, and LiBF₄; compounds that contain lithium and nitrogen such as LiPON, LiN(SO₂CF₃)₂, LiN(SO₂C₂F₅)₂, Li₃N, and LiN(SO₂C₃F₇)₂; crystals with a lithium ion conductive perovskite structure such as La_{0.55}Li_{0.35}TiO₃; crystals with a garnet-type structure such as Li₇-La₃Zr₂O₁₃; glass such as 50Li₄SiO₄·50Li₃BO₃; lithium phosphorus sulfide-based crystals such as Li₁₀GeP₂S₁₂ and Li_{3.25}Ge_{0.25}P_{0.75}S₄; lithium phosphorus sulfide-based glass such as 30Li₂S·26B₂S₃·44LiI, 63Li₂S·36SiS₂·1Li₃PO₄, 57Li₂S·38SiS₂·5Li₄SiO₄, 70Li₂S·30GeS₂, 50Li₂S·50GeS₂; glass ceramics such as Li₇P₃S₁₁, Li_{3.25}P_{0.95}S₄, Li₁₀GeP₂S₁₂, Li_{9.6}P₃S₁₂, and Li_{9.54}Si_{1.74}P_{1.44}S_{11.7}Cl_{0.3}; and the like. The inorganic solid electrolyte may be covered with a polymer gel electrolyte. Also, in the case where the inorganic solid electrolyte is used, a polymer gel electrolyte layer may be provided between an inorganic solid electrolyte layer and an electrode.

As the organic solvent used to prepare the non-aqueous electrolyte used in the present invention, organic solvents that are normally used in non-aqueous electrolytes can be used alone or in a combination of two or more. Specific examples include a saturated cyclic carbonate compound, a saturated cyclic ester compound, a sulfoxide compound, a sulfone compound, an amide compound, a saturated chain carbonate compound, a chain ether compound, a cyclic ether compound, a saturated chain ester compound, and the like.

Among the organic solvents listed above, it is preferable to use a saturated cyclic carbonate compound, a saturated cyclic ester compound, a sulfoxide compound, a sulfone compound, and an amide compound because they have a high relative dielectric constant and function to increase the dielectric constant of the non-aqueous electrolyte. In particular, it is preferable to use a saturated cyclic carbonate compound. Examples of the saturated cyclic carbonate compound include ethylene carbonate, 1,2-propylene carbonate, 1,3-propylene carbonate, 1,2-butylene carbonate, 1,3-butylene carbonate, 1,1-dimethylethylene carbonate, and the like. Examples of the saturated cyclic ester compound include γ-butyrolactone, γ-valerolactone, γ-caprolactone, δ-hexanolactone, δ-octanolactone, and the like. Examples of the sulfoxide compound include dimethyl sulfoxide, diethyl sulfoxide, dipropyl sulfoxide, diphenyl sulfoxide, thiophene, and the like. Examples of the sulfone compound include dimethyl sulfone, diethyl sulfone, dipropyl sulfone, diphenyl sulfone, sulfolane (also referred to as tetramethylene sulfone), 3-methyl sulfolane, 3,4-dimethylsulfolane, 3,4-diphenymethyl sulfolane, sulfolene, 3-methyl sulfolene, 3-ethyl sulfolene, 3-bromomethyl sulfolene, and the like. It is preferable to use sulfolane and tetramethyl sulfolane. Examples of the amide compound include N-methyl pyrrolidone, dimethyl formamide, dimethyl acetamide, and the like.

Among the organic solvents listed above, a saturated chain carbonate compound, a chain ether compound, a cyclic ether compound, and a saturated chain ester compound can contribute to reducing the viscosity of the non-aqueous electrolyte, increasing the mobility of electrolyte ions, and the like, as well as providing excellent battery characteristics such as output density. In particular, it is preferable to use a saturated chain carbonate compound because it has a low viscosity and can enhance the performance of the non-aqueous electrolyte at low temperatures. Examples of the saturated chain carbonate compound include dimethyl carbonate, ethyl methyl carbonate, diethyl carbonate, ethyl butyl carbonate, methyl-t-butyl carbonate, diisopropyl carbonate, t-butylpropyl carbonate, and the like. Examples of the chain ether compound and the cyclic ether compound include dimethoxyethane, ethoxy methoxy ethane, diethoxyethane, tetrahydrofuran, dioxolane, dioxane, 1,2-bis(methoxycarbonyloxy)ethane, 1,2-bis(ethoxycarbonyloxy)ethane, 1,2-bis(ethoxycarbonyloxy)propane, ethylene glycol bis(trifluoroethyl)ether, propylene glycol bis(trifluoroethyl)ether, ethylene glycol bis(trifluoromethyl)ether, diethylene glycol bis(trifluoroethyl)ether, and the like. Among these, it is preferable to use dioxolane.

As the saturated chain ester compound, it is preferable to use a monoester compound in which the total number of carbon atoms in a molecule is 2 to 8 and a diester compound in which the total number of carbon atoms in a molecule is 2 to 8. Specific compounds include methyl formate, ethyl formate, methyl acetate, ethyl acetate, propyl acetate, isobutyl acetate, butyl acetate, methyl propionate, ethyl propionate, methyl butyrate, methyl isobutyrate, trimethyl methyl acetate, trimethyl ethyl acetate, methyl malonate, ethyl malonate, methyl succinate, ethyl succinate, methyl 3-methoxypropionate, ethyl 3-methoxypropionate, ethylene glycol diacetyl, propylene glycol diacetyl, and the like. It is preferable to use methyl formate, ethyl formate, methyl acetate, ethyl acetate, propyl acetate, isobutyl acetate, butyl acetate, methyl propionate, and ethyl propionate.

Other examples of the organic solvent used to prepare the non-aqueous electrolyte include acetonitrile, propionitrile, nitromethane, derivatives thereof, and various types of ionic liquids.

Examples of the polymer used in the polymer gel electrolyte include polyethylene oxide, polypropylene oxide, polyvinyl chloride, polyacrylonitrile, polymethyl methacrylate, polyethylene, polyvinylidene fluoride, polyhexafluoropropylene, and the like. Examples of the polymer used in the pure polymer electrolyte include polyethylene oxide, polypropylene oxide, and polystyrene sulfonate. There is no particular limitation on the mixing ratio of the polymer in the gel electrolyte and the composite forming method, and a mixing ratio and a composite forming method that are known in the art can be used.

In order to achieve improvement in battery life, safety, and the like, the non-aqueous electrolyte may contain other known additives such as, for example, an electrode coating film forming agent, an antioxidant, a flame retardant, and an overcharge protecting agent. In the case where other known additives are used, the amount of other known additives relative to the total amount of the non-aqueous electrolyte is normally 0.01 parts by mass to 10 parts by mass, and preferably 0.1 parts by mass to 5 parts by mass.

The non-aqueous electrolyte secondary battery to which the present invention is applicable may include a separator between the positive electrode and the negative electrode. As the separator, a micro-porous polymer film normally used in a non-aqueous electrolyte secondary battery can be used without any particular limitation. Examples of the film include films that are made of: polyethers such as polyethylene, polypropylene, polyvinylidene fluoride, polyvinylidene chloride, polyacrylonitrile, polyacrylamide, polytetrafluoroethylene, polysulfone, polyether sulfone, polycarbonate, polyamide, polyimide, polyethylene oxide, and polypropylene oxide; various types of celluloses such as carboxymethyl cellulose and hydroxypropyl cellulose; polymer compounds composed mainly of poly(meth) acrylic acid and various types of esters thereof; derivatives of the polymer compounds; and copolymers and mixtures thereof; and the like. These films may be coated with a ceramic material such as alumina or silica, magnesium oxide, aramid resin, or polyvinylidene fluoride.

These films can be used alone, or stacked and used as a multilayer film. Furthermore, these films may contain various types of additives, and there is no particular limitation on the type and the amount of additives. Among these films, in a secondary battery produced using a method for producing a secondary battery, a film made of polyethylene, polypropylene, polyvinylidene fluoride, or polysulfone is preferably used. In the case where the non-aqueous solvent electrolyte is a pure polymer electrolyte or an inorganic solid electrolyte, the separator may be omitted.

As the outer casing member of the non-aqueous electrolyte secondary battery to which the present invention is applicable, a laminate film or a metal container can be used. The thickness of the outer casing member is normally 0.5 mm or less, and preferably 0.3 mm or less. The outer casing member may be flat (thin), rectangular, cylindrical, coin-shaped, button-shaped, or the like.

As the laminate film, a multilayer film that includes a metal layer between resin films may be used. As the metal layer, in order to reduce weight, it is preferable to use an aluminum foil or an aluminum alloy foil. The resin films may be made of a polymer material such as, for example, polypropylene, polyethylene, nylon, or polyethylene terephthalate. The laminate film can be formed into the shape of the outer casing member by being sealed with thermal fusing.

The metal container can be formed using, for example, stainless steel, aluminum, an aluminum alloy, or the like. The aluminum alloy is preferably an alloy that contains an element such as magnesium, zinc, or silicon. In the case where aluminum or an aluminum alloy is used, the amount of transition metal such as iron, copper, nickel, or chromium is set to 1% or less, as a result of which, long-term reliability and heat dissipation under a high temperature environment can be dramatically improved.

The non-aqueous electrolyte secondary battery to which the present invention is applicable may be a unit cell, a stack-type battery in which multiple layers including a positive electrode and a negative electrode are stacked with a separator interposed therebetween, or a wound-type battery in which a separator, a positive electrode, and a negative electrode that are long sheets are wound. However, the present invention is preferably applied to a stack-type non-aqueous electrolyte secondary battery or a wound-type non-aqueous electrolyte secondary battery because the charge discharge capacity of the battery is high, and thermal runaway caused by an internal short circuit is likely to occur.

### Examples

Hereinafter, the present invention will be described in further detail by way of examples and comparative examples. However, the present invention is not limited to the examples and the like given below. Unless otherwise stated, the terms "part" and "%" used in the examples mean "part by mass" and "% by mass", respectively.

### [Production Example 1]

### Synthesis of Sulfur-Modified Polyacrylonitrile

10 parts by mass of polyacrylonitrile powder (available from Sigma-Aldrich Co.) classified with a sieve having an opening diameter of 30 µm and 30 parts by mass of sulfur powder (available from Sigma-Aldrich Co., average particle size: 200 µm) were mixed using a mortar. As in the examples disclosed in JP 2013-054957A, the mixture was housed in a bottomed cylindrical glass tube, and thereafter, the lower portion of the glass tube was placed in a crucible electric furnace and heated at 400°C for 1 hour while removing hydrogen sulfide generated under a flow of nitrogen gas. After cooling, the resulting product was placed in a glass tube oven, and heated at 250°C for 3 hours while evacuating the glass tube oven so as to remove elemental sulfur. The obtained sulfur-modified product was pulverized using a ball mill and classified using a sieve. In this way, sulfur-modified polyacrylonitrile with an average particle size of 10 µm was obtained. The amount of sulfur in the obtained sulfur-modified polyacrylonitrile was 38.4 mass%. The amount of sulfur was calculated from the result of analysis performed using a CHN analyzer capable of analyzing sulfur and oxygen.

### [Production of Positive Electrode 1]

A slurry was prepared by mixing 90.0 parts by mass of Li(Ni_{1/3}Co_{1/3}Mn_{1/3})O₂ (available from Nippon Chemical Industrial, Co., Ltd., product name: NCM 111) as a positive electrode active material, 5.0 parts by mass of acetylene black (available from Denki Kagaku Kogyo K.K.) as a conductive aid, and 5.0 parts by mass of polyvinylidene fluoride (available from Kureha Corporation) as a binder with 100 parts by mass of N-methyl pyrrolidone and dispersing them using a rotation/revolution mixer. The slurry composition was continuously applied to both surfaces of a current collector made of a roll of an aluminum foil (with a thickness of 20 µm) using a comma coater method, and dried at 90°C for 3 hours. The roll was cut into a piece with a width of 50 mm and a length of 90 mm, and the electrode material mixture layer on both surfaces was removed 10 mm from the end of one of the width sides (shorter sides) of the cut piece so as to expose the current collector. After that, the cut piece was vacuum-dried at 150°C for 2 hours. In this way, a positive electrode 1 containing Li(Ni_{1/3}Co_{1/3}Mn_{1/3})O₂ as a positive electrode active material was produced.

### [Production of Positive Electrode 2]

A positive electrode 2 containing Li(Ni_{0.8}Co_{0.15}Al_{0.05})O₂ as a positive electrode active material was produced in the same manner as the positive electrode 1 was produced, except that Li(Ni_{0.8}Co_{0.15}Al_{0.05})O₂ was used as the positive electrode active material instead of Li(Ni_{1/3}Co_{1/3}Mn_{1/3})O₂.

### [Production of Negative Electrode 1]

A slurry was prepared by mixing 92.0 parts by mass of sulfur-modified polyacrylonitrile as an electrode active material, 3.5 parts by mass of acetylene black (available from Denki Kagaku Kogyo K.K.) and 1.5 parts by mass of carbon nanotubes (VGCF: available from Showa Denko K. K.) as conductive aids, and 1.5 parts by mass of styrene-butadiene rubber (aqueous dispersion, available from Zeon Corporation) and 1.5 parts by mass of carboxymethyl cellulose sodium (available from Daicel Finechem, Ltd.) as binders with 120 parts by mass of water, and dispersing them using a rotation/revolution mixer. The slurry composition was continuously applied to both surfaces of a current collector made of a roll of a carbon-coated aluminum foil (with a thickness of 22 µm) using a comma coater method, and dried at 90°C for 3 hours. The roll was cut into a piece with a width of 55 mm and a length of 95 mm, and the electrode material mixture layer on both surfaces was removed 10 mm from the end of one of the width sides (shorter sides) of the cut piece so as to expose the current collector. After that, the cut piece was vacuum-dried at 150°C for 2 hours. In this way, a negative electrode 1 containing sulfur-modified polyacrylonitrile as a negative electrode active material was produced.

### [Production of Negative Electrode 2]

A negative electrode 2 containing sulfur-modified polyacrylonitrile as the negative electrode active material was produced in the same manner as the negative electrode 1 was produced, except that the amount of sulfur-modified polyacrylonitrile as the electrode active material was changed from 92.0 parts by mass to 87.0 parts by mass, and the amount of acetylene black as the conductive aid was changed from 3.5 parts by mass to 8.5 parts by mass.

### [Production of Negative Electrode 3]

A negative electrode 3 containing artificial graphite as the negative electrode active material was produced in the same manner as the negative electrode 1 was produced, except that artificial graphite was used as the electrode active material instead of sulfur-modified polyacrylonitrile, and a roll of a copper foil (with a thickness of 10 µm) was used as the current collector instead of the roll of the carbon-coated aluminum foil (with a thickness of 22 µm).

### [Preparation of Non-Aqueous Electrolyte]

An electrolyte solution was prepared by dissolving LiPF₆ at a concentration of 1.0 mol/L in a solvent mixture containing 50 vol% of ethylene carbonate and 50 vol% of diethyl carbonate.

### <Production of Stack-Type Laminate Battery>

A positive electrode and a negative electrode were stacked with a separator (available from Celgard, LLC, product name: Celgard 2325) interposed therebetween according to the combination of positive electrode and negative electrode and the battery capacity shown in Table 1, and a positive electrode terminal and a negative electrode terminal were respectively attached to the positive electrode and the negative electrode. In this way, a stack body was obtained. The obtained stack body and the non-aqueous electrolyte were housed in a flexible film. In this way, stack-type laminate batteries of Examples 1 to 4 and Comparative Examples 1 to 2 were obtained.

**[Table 1]**

| | Positive electrode | Negative electrode | Battery capacity |
|---|---|---|---|
| Example 1 | Positive electrode 1 | Negative electrode 1 | 1 Ah |
| Example 2 | Positive electrode 1 | Negative electrode 2 | 1 Ah |
| Example 3 | Positive electrode 2 | Negative electrode 1 | 3 Ah |
| Example 4 | Positive electrode 2 | Negative electrode 2 | 3 Ah |
| Comparative Example 1 | Positive electrode 1 | Negative electrode 3 | 1 Ah |
| Comparative Example 2 | Positive electrode 2 | Negative electrode 3 | 3 Ah |

### [Charging Method]

The batteries of Examples 1 to 4 were charged and discharged once in a thermostatic chamber set at 30°C under conditions of an end-of-charge voltage of 3.2 V, an end-of-discharge voltage of 0.8 V, a charging rate of 0.1 C, and a discharging rate of 0.1 C, and then subjected to degassing. The batteries were further subjected to three charge discharge cycles under the same conditions, and then charged to 3.2 V at a charging rate of 0.1 C. Then, the batteries were subjected to a nail penetration test. The batteries of Comparative Examples 1 to 2 were charged and discharged once in a thermostatic chamber set at 30°C under conditions of an end-of-charge voltage of 4.2V, an end-of-discharge voltage of 3.0 V, a charging rate of 0.1 C, and a discharging rate of 0.1 C, and then subjected to degassing. The batteries were further subjected to three charge discharge cycles under the same conditions, and then charged to 4.2 V at a charging rate of 0.1 C. Then, the batteries were subjected to the test.

### [Nail Penetration Test]

A battery was fixed onto a phenol resin plate in which a hole with a diameter of 10 mm was formed. An iron nail with a diameter of 3 mm and a length of 65 mm was vertically penetrated into the battery surface at the center of the hole at a speed of 1 mm/s, and the battery with the nail penetrated to a depth of 10 mm from the battery surface was held for 10 minutes. After that, the nail was removed from the battery. The battery surface temperatures (°C) measured 30 seconds after the nail was penetrated, 5 minutes after the nail was penetrated, and immediately after the nail was removed are shown in Table 2. The battery surface temperatures were obtained by measuring the temperature of the battery surface at a position 10 mm apart from where the nail was penetrated, using a thermocouple.

**[Table 2]**

| | Surface Temperature (°C) | | | | | |
|---|---|---|---|---|---|---|
| | Example | | | | Comparative Example | |
| | 1 | 2 | 3 | 4 | 1 | 2 |
| Before test | 23 | 23 | 24 | 23 | 24 | 26 |
| 30 seconds after nail penetration | 23 | 23 | 24 | 23 | 63 | 407 |
| 5 minutes after nail penetration | 23 | 23 | 24 | 23 | 72 | 192 |
| Immediately after nail removal | 23 | 23 | 25 | 26 | 61 | 107 |

### Industrial Applicability

According to the present invention, it is possible to provide a non-aqueous electrolyte secondary battery that is small and lightweight, has a high capacity, and can be produced without causing a size increase and a significant cost increase, wherein, even if an internal short circuit occurs, thermal runaway is unlikely to occur, and there is no risk of ignition or explosion.

### List of Reference Numerals

- 1: positive electrode
- 1a: positive electrode current collector
- 2: negative electrode
- 2a: negative electrode current collector
- 3: non-aqueous electrolyte
- 4: positive electrode case
- 5: negative electrode case
- 6: gasket
- 7: separator
- 10: coin-type non-aqueous electrolyte secondary battery
- 10': cylindrical non-aqueous electrolyte secondary battery
- 11: negative electrode
- 12: negative electrode current collector
- 13: positive electrode
- 14: positive electrode current collector
- 15: non-aqueous electrolyte
- 16: separator
- 17: positive electrode terminal
- 18: negative electrode terminal
- 19: negative electrode plate
- 20: negative electrode lead
- 21: positive electrode plate
- 22: positive electrode lead
- 23: case
- 24: insulating plate
- 25: gasket
- 26: safety valve
- 27: PTC element

## Claims

1. A method for suppressing thermal runaway caused by an internal short circuit,
wherein sulfur-modified polyacrylonitrile is contained in a negative electrode material mixture layer in a non-aqueous electrolyte secondary battery that includes: a positive electrode that contains a positive electrode active material; a negative electrode that contains a negative electrode active material; and a non-aqueous electrolyte.

2. The method for suppressing thermal runaway caused by an internal short circuit according to claim 1,
wherein the amount of sulfur-modified polyacrylonitrile in the negative electrode material mixture layer is 30 mass% or more.

3. The method for suppressing thermal runaway caused by an internal short circuit according to claim 1 or 2,
wherein the non-aqueous electrolyte contains an organic solvent.

4. The method for suppressing thermal runaway caused by an internal short circuit according to any one of claims 1 to 3,
wherein the positive electrode active material is at least one selected from the group consisting of a lithium transition metal composite oxide, a lithium-containing transition metal phosphoric acid compound, and a lithium-containing silicate compound.
